# EUROPEAN PATENT APPLICATION

(11) **EP 4 333 112 A1**
(43) Date of publication of application: **06.03.2024**
(21) Application number: 22861186.9
(22) Date of filing: 16.08.2022
(51) Int. Cl.: H01M 4/139, H01M 4/62

(54) **METHOD FOR PRODUCING POSITIVE ELECTRODE COMPOSITION AND METHOD FOR PRODUCING POSITIVE ELECTRODE**

(30) Priority: 27.08.2021 JP 2021139161
(71) Applicant: Denka Company Limited, Tokyo 103-8338 (JP)
(72) Inventor: NAGAI, Tatsuya, Tokyo 103-8338 (JP); KITAE, Yuma, Tokyo 103-8338 (JP); ITO, Tetsuya, Tokyo 103-8338 (JP)
(74) Representative: Mewburn Ellis LLP
(86) International application number: PCT/JP2022/030970
(87) International publication number: WO 2023/026898

(57) **Abstract**

A method for producing a positive electrode composition, the method including: a first step of mixing a first agent containing a binding material and a first liquid medium, a second agent containing carbon black and a second liquid medium, and a third agent containing carbon nanotubes and a third liquid medium to obtain a mixed solution; and a second step of mixing the mixed solution and an active material to obtain a positive electrode composition.

## Description

### Technical Field

The present invention relates to a method for producing a positive electrode composition and a method for producing a positive electrode.

### Background Art

A surge of environmental and energy issues leads to vigorous development of technologies for realizing a low-carbon society that reduces dependency on fossil fuels. Such technological developments include many different fields, including development of low-emission vehicles such as hybrid electric vehicles and electric vehicles, development of natural energy power generation and storage systems such as solar power generation and wind power generation, development of next-generation electricity transmission network that efficiently supplies electric power and reduces power transmission loss, and the like.

One of key devices commonly required for those technologies is a battery, and such a battery requires a high energy density for downsizing the system. Furthermore, there is a need for high output characteristics that enable stable supply of electric power regardless of operating ambient temperatures. Further, there is also a need for favorable cycle characteristics and the like that can withstand long-term use. Therefore, conventional lead storage batteries, nickel-cadmium batteries, and nickel-hydrogen batteries have been rapidly replaced with lithium ion secondary batteries having higher energy density, output characteristics, and cycle characteristics.

Conventionally, a positive electrode of a lithium ion secondary battery is produced by applying a positive electrode paste containing a positive electrode active material, an electrical conducting material, and a binding material (also called a binder) to a current collector. As the positive electrode active material, lithium-containing composite oxides such as lithium cobalt oxide and lithium manganese oxide have been used. Furthermore, since the positive electrode active material has poor electrical conductivity, an electrical conducting material such as carbon black has been added to the positive electrode paste for the purpose of imparting electrical conductivity (for example, Patent Literature 1).

### Citation List

### Patent Literature

Patent Literature 1: Japanese Unexamined Patent Publication No. 2008-227481

### Summary of Invention

### Technical Problem

In recent years, there is a need for further performance improvements in lithium ion secondary batteries.

An object of the present invention is to provide a positive electrode composition with which a lithium ion secondary battery excellent in discharge rate characteristics and cycle characteristics can be obtained. Furthermore, an object of the present invention is to provide a method for producing a positive electrode with which a lithium ion secondary battery excellent in discharge rate characteristics and cycle characteristics can be realized.

### Solution to Problem

The present invention relates to, for example, the following <1> to <6>.
<1> A method for producing a positive electrode composition, the method including: a first step of mixing a first agent containing a binding material and a first liquid medium, a second agent containing carbon black and a second liquid medium, and a third agent containing carbon nanotubes and a third liquid medium to obtain a mixed solution; and a second step of mixing the mixed solution and an active material to obtain a positive electrode composition.
<2> A method for producing a positive electrode composition, the method including: a first step of mixing a first agent containing a binding material and a first liquid medium and a second agent containing carbon black and a second liquid medium to obtain a first mixed solution; a second step of mixing the first mixed solution and a third agent containing carbon nanotubes and a third liquid medium to obtain a second mixed solution; and a third step of mixing the second mixed solution and an active material to obtain a positive electrode composition.
<3> The method described in <1> or <2>, in which the carbon black has a BET specific surface area of 100 to 400 m²/g and a crystallite size (Lc) of 15 to 26 Å.
<4> The method described in any one of <1> to <3>, in which the carbon nanotubes have an average diameter of 5 to 15 nm, and a ratio (average diameterBET specific surface area) of the average diameter with respect to a BET specific surface area of the carbon nanotubes is 0.01 to 0.068 nm/(m²/g).
<5> The method described in any one of <1> to <4>, in which a content of the carbon black is 40 to 90% by mass on the basis of the total amount of the carbon black and the carbon nanotubes.
<6> A method for producing a positive electrode, the method including: a first step of producing a positive electrode composition by the method described in any one of <1> to <5>; and a second step of applying the positive electrode composition onto a current collector to form a mixed material layer containing the carbon black, the carbon nanotubes, the binding material, and the active material on the current collector.

### Advantageous Effects of Invention

According to the present invention, there is provided a positive electrode composition with which a lithium ion secondary battery excellent in discharge rate characteristics and cycle characteristics can be obtained. Furthermore, according to the present invention, there is provided a method for producing a positive electrode with which a lithium ion secondary battery excellent in discharge rate characteristics and cycle characteristics can be realized.

### Description of Embodiments

Hereinafter, preferred embodiments of the present invention will be specifically described.

A method for producing a positive electrode composition of the present embodiment is a method of mixing a first agent containing a binding material and a first liquid medium, a second agent containing carbon black and a second liquid medium, a third agent containing carbon nanotubes and a third liquid medium, and an active material in a predetermined order to obtain a positive electrode composition.

According to the method for producing a positive electrode composition of the present embodiment, as compared to a case where carbon black, carbon nanotubes, a binding material, and an active material are mixed at the same time, a positive electrode composition capable of achieving excellent discharge rate characteristics and cycle characteristics is obtained.

In the present embodiment, the carbon black and the carbon nanotubes function as electrical conducting materials. The basic role of the electrical conducting material is to impart electrical conductivity to a positive electrode active material having poor electrical conductivity. Furthermore, in a lithium ion secondary battery, as positive electrode active materials expand and contract through repeated charging and discharging, the contact points between the positive electrode active materials are gradually lost, but the electrical conducting material also has a role of connecting the positive electrode active materials whose contact points have been lost. In a case where the dispersibility of the electrical conducting material with respect to the positive electrode active material is poor, the positive electrode active material and the electrical conducting material cannot come into sufficient contact with each other, and a conductive path is difficult to be formed, so that a problem arises in that the performance of the active material cannot be sufficiently brought out. As a result, areas with poor electrical conductivity appear locally in the positive electrode, and thus it is considered that the active material is not sufficiently utilized, resulting in a decrease in discharge capacity and a shortened battery life. Furthermore, it is considered to increase the content of the electrical conducting material in order to secure a conductive path, but from the viewpoint of improving battery characteristics, it is desirable to decrease the content of the electrical conducting material that does not contribute to charge/discharge capacity in the positive electrode and to increase the content of the positive electrode active material. According to the method for producing a positive electrode composition of the present embodiment, it is considered that, since the aggregation of carbon black and carbon nanotubes is suppressed and uniform dispersibility of the electrical conducting material is secured, excellent battery characteristics are obtained even in a case where the content of the active material is large.

The method for producing a positive electrode composition of the present embodiment may be, for example, the following first embodiment or second embodiment.

In the first embodiment, the method for producing a positive electrode composition includes a first step of mixing a first agent containing a binding material and a first liquid medium, a second agent containing carbon black and a second liquid medium, and a third agent containing carbon nanotubes and a third liquid medium to obtain a mixed solution, and a second step of mixing the mixed solution and an active material to obtain a positive electrode composition.

According to the first embodiment, as compared to a case where carbon black, carbon nanotubes, a binding material, and an active material are mixed at the same time, a positive electrode composition capable of achieving excellent discharge rate characteristics and cycle characteristics is obtained. The reason why the above effect is exhibited by the production method of the first embodiment is considered that the aggregation hardly occurs due to the interaction between the binding material and the carbon black in the first step, a dispersed state is achieved in which the entanglement with the carbon nanotubes hardly occurs, and non-uniformity of the electrode structure due to aggregation of the carbon black or the entanglement of the carbon black and the carbon nanotubes is suppressed.

The first step of the first embodiment is a step of mixing a first agent containing a binding material and a first liquid medium, a second agent containing carbon black and a second liquid medium, and a third agent containing carbon nanotubes and a third liquid medium to obtain a mixed solution.

In the first step of the first embodiment, the method of mixing the first agent, the second agent, and the third agent is not particularly limited, and mixing may be performed by a known method (for example, stirring and mixing by a ball mill, a sand mill, a twin-screw kneader, a rotation/revolution type agitator, a planetary mixer, a disper mixer, or the like). The first step of the first embodiment may be, for example, a step of charging the first agent, the second agent, and the third agent into a mixing container and then stirring the mixture to obtain a mixed solution.

The second step of the first embodiment is a step of mixing the mixed solution obtained in the first step and an active material to obtain a positive electrode composition.

In the second step of the first embodiment, the method of mixing the mixed solution and the active material is not particularly limited, and mixing may be performed by a known method (for example, stirring and mixing by a ball mill, a sand mill, a twin-screw kneader, a rotation/revolution type agitator, a planetary mixer, a disper mixer, or the like). The second step of the first embodiment may be, for example, a step of charging an active material into a mixing container containing the mixed solution and then stirring the mixture to obtain a positive electrode composition.

In the second embodiment, the method for producing a positive electrode composition includes a first step of mixing a first agent containing a binding material and a first liquid medium and a second agent containing carbon black and a second liquid medium to obtain a first mixed solution, a second step of mixing the first mixed solution and a third agent containing carbon nanotubes and a third liquid medium to obtain a second mixed solution, and a third step of mixing the second mixed solution and an active material to obtain a positive electrode composition.

According to the second embodiment, as compared to a case where carbon black, carbon nanotubes, a binding material, and an active material are mixed at the same time, a positive electrode composition capable of achieving excellent discharge rate characteristics and cycle characteristics is obtained. The reason why the above effect is exhibited by the production method of the first embodiment is considered that the aggregation hardly occurs due to the interaction between the binding material and the carbon black in the first step, a dispersed state is achieved in which the entanglement with the carbon nanotubes hardly occurs, and non-uniformity of the electrode structure due to aggregation of the carbon black or the entanglement of the carbon black and the carbon nanotubes is suppressed.

The first step of the second embodiment is a step of mixing a first agent containing a binding material and a first liquid medium and a second agent containing carbon black and a second liquid medium to obtain a first mixed solution.

In the first step of the second embodiment, the method of mixing the first agent and the second agent is not particularly limited, and mixing may be performed by a known method (for example, stirring and mixing by a ball mill, a sand mill, a twin-screw kneader, a rotation/revolution type agitator, a planetary mixer, a disper mixer, or the like). The first step of the second embodiment may be, for example, a step of charging the first agent and the second agent into a mixing container and then stirring the mixture to obtain a first mixed solution.

The second step of the second embodiment is a step of mixing the first mixed solution obtained in the first step and a third agent containing carbon nanotubes and a third liquid medium to obtain a second mixed solution.

In the second step of the second embodiment, the method of mixing the first mixed solution and the third agent is not particularly limited, and mixing may be performed by a known method (for example, stirring and mixing by a ball mill, a sand mill, a twin-screw kneader, a rotation/revolution type agitator, a planetary mixer, a disper mixer, or the like). The second step of the second embodiment may be, for example, a step of charging a third agent into a mixing container containing the first mixed solution and then stirring the mixture to obtain a second mixed solution.

The third step of the second embodiment is a step of mixing the second mixed solution obtained in the second step and an active material to obtain a positive electrode composition.

In the third step of the second embodiment, the method of mixing the second mixed solution and the active material is not particularly limited, and mixing may be performed by a known method (for example, stirring and mixing by a ball mill, a sand mill, a twin-screw kneader, a rotation/revolution type agitator, a planetary mixer, a disper mixer, or the like). The third step of the second embodiment may be, for example, a step of charging an active material into a mixing container containing the second mixed solution and then stirring the mixture to obtain a positive electrode composition.

Hereinafter, each component used in the method for producing a positive electrode composition of the present embodiment will be described in detail.

The first agent contains a binding material and a first liquid medium.

Examples of the binding material include polyvinylidene fluoride, polytetrafluoroethylene, a styrene-butadiene copolymer, and a (meth)acrylic acid ester copolymer. The polymer structure of the binding material may be, for example, a random copolymer, an alternating copolymer, a graft copolymer, a block copolymer, or the like. As the binding material, from the viewpoint of excellent voltage resistance, polyvinylidene fluoride is preferred.

The content of the binding material in the first agent is not particularly limited, and may be appropriately changed so that the content of the binding material in the positive electrode composition is within a desired range. The content of the binding material in the positive electrode composition may be, for example, 0.3% by mass or more on the basis of the total mass of the solid contents in the positive electrode composition, and may be 0.5% by mass or more, 1.0% by mass or more, or 1.5% by mass or more from the viewpoint of further improving the binding property of the positive electrode plate to achieve more excellent cycle characteristics. The content of the binding material in the positive electrode composition may be, for example, 5.0% by mass or less on the basis of the total mass of the solid contents in the positive electrode composition, and may be 4.5% by mass or less, 4.0% by mass or less, or 3.5% by mass or less, from the viewpoint that the resistance of the positive electrode plate is further reduced and discharge rate characteristics are further improved. That is, the content of the binding material in the positive electrode composition may be, for example, 0.3 to 5.0% by mass, 0.3 to 4.5% by mass, 0.3 to 4.0% by mass, 0.3 to 3.5% by mass, 0.5 to 5.0% by mass, 0.5 to 4.5% by mass, 0.5 to 4.0% by mass, 0.5 to 3.5% by mass, 1.0 to 5.0% by mass, 1.0 to 4.5% by mass, 1.0 to 4.0% by mass, 1.0 to 3.5% by mass, 1.5 to 5.0% by mass, 1.5 to 4.5% by mass, 1.5 to 4.0% by mass, or 1.5 to 3.5% by mass, on the basis of the total mass of the solid contents in the positive electrode composition.

The first liquid medium is not particularly limited as long as it can dissolve the binding material and is compatible with the second liquid medium and the third liquid medium. Examples of the first liquid medium include water, N-methyl-2-pyrrolidone, cyclohexane, methyl ethyl ketone, and methyl isobutyl ketone, and among these, from the viewpoint of solubility, N-methyl-2-pyrrolidone is preferred.

The content of the first liquid medium in the first agent is not particularly limited, and may be appropriately changed so that the solid content concentration of the positive electrode composition is within a desired range without any particular limitation as long as the content is in a range that the binding material can be dissolved.

The solid content concentration of the first agent is not particularly limited, but may be, for example, 1.0% by mass or more, and may be 2.0% by mass or more, 3.0% by mass or more, or 4.0% by mass or more. Furthermore, the solid content concentration of the first agent may be, for example, 11.0% by mass or less, and may be 10.0% by mass or less or 9.0% by mass or less. That is, the solid content concentration of the first agent may be, for example, 1.0 to 11.0% by mass, 1.0 to 10.0% by mass, 1.0 to 9.0% by mass, 2.0 to 11.0% by mass, 2.0 to 10.0% by mass, 2.0 to 9.0% by mass, 3.0 to 11.0% by mass, 3.0 to 10.0% by mass, 3.0 to 9.0% by mass, 4.0 to 11.0% by mass, 4.0 to 10.0% by mass, or 4.0 to 9.0% by mass.

The first agent may further contain components other than the binding material and the first liquid medium. The first agent may further contain, for example, polyvinylpyrrolidone, polyvinylimidazole, polyethylene glycol, polyvinyl alcohol, polyvinyl butyral, carboxymethylcellulose, acetylcellulose, a carboxylic acid-modified (meth)acrylic acid ester copolymer, or the like.

The second agent contains carbon black and a second liquid medium.

The carbon black may be carbon black used as a general electrical conducting material for batteries, and may be acetylene black, furnace black, channel black, and the like. The carbon black is preferably acetylene black from the viewpoint of excellent purity and ease of obtaining excellent battery characteristics.

As the carbon black, carbon black having a BET specific surface area of 100 to 400 m²/g and a crystallite size (Lc) of 15 to 26 Å is preferred.

The BET specific surface area of the carbon black is preferably 100 m²/g or more. When the BET specific surface area of the carbon black is 100 m²/g or more, there are more electrical contact points with the active material and the electrical conducting material, and the effect of imparting electrical conductivity becomes more favorable, so that more excellent battery characteristics are obtained. From the viewpoint of further reducing the internal resistance and the viewpoint of more excellent discharge rate characteristics and cycle characteristics, the BET specific surface area of the carbon black is preferably 130 m²/g or more and more preferably 150 m²/g or more, and may be 170 m²/g or more, 200 m²/g or more, 240 m²/g or more, 280 m²/g or more, 320 m²/g or more, or 360 m²/g or more.

Furthermore, the BET specific surface area of the carbon black is preferably 400 m²/g or less. When the BET specific surface area of the carbon black is 400 m²/g or less, the interaction between the liquid medium and the electrical conducting material and the interaction between the electrical conducting materials are reduced, and the carbon black is likely to be uniformly dispersed with respect to the active material. Thereby, a conductive path is easily formed, so that more excellent battery characteristics are obtained. From the viewpoint of further reducing the internal resistance and the viewpoint of more excellent discharge rate characteristics and cycle characteristics, the BET specific surface area of the carbon black is preferably 350 m²/g or less and may be more preferably 300 m²/g or less, 250 m²/g or less, or 150 m²/g or less.

That is, the BET specific surface area of the carbon black may be, for example, 100 to 400 m²/g, 100 to 350 m²/g, 100 to 300 m²/g, 100 to 250 m²/g, 100 to 150 m²/g, 130 to 400 m²/g, 130 to 350 m²/g, 130 to 300 m²/g, 130 to 250 m²/g, 130 to 150 m²/g, 150 to 400 m²/g, 150 to 350 m²/g, 150 to 300 m²/g, 150 to 250 m²/g, 170 to 400 m²/g, 170 to 350 m²/g, 170 to 300 m²/g, 170 to 250 m²/g, 170 to 150 m²/g, 200 to 400 m²/g, 200 to 350 m²/g, 200 to 300 m²/g, 200 to 250 m²/g, 240 to 400 m²/g, 240 to 350 m²/g, 240 to 300 m²/g, 240 to 250 m²/g, 280 to 400 m²/g, 280 to 350 m²/g, 280 to 300 m²/g, 320 to 400 m²/g, 320 to 350 m²/g, or 360 to 400 m²/g.

The BET specific surface area of the carbon black can be measured by a static capacity method according to JIS Z 8830 using nitrogen as an adsorbate.

The crystallite size (Lc) of the carbon black is preferably 15 Å or more. When the crystallite size (Lc) is 15 Å or more, it becomes easier for π electrons to move through the crystal layer, and a conductive path that carries electrons flowing from the current collector to the active material is more easily formed, so that more excellent battery characteristics are obtained. The crystallite size (Lc) of the carbon black may be 16 Å or more, 18 Å or more, or 20 Å or more.

Furthermore, the crystallite size (Lc) of the carbon black is preferably 26 Å or less. When the crystallite size (Lc) is 26 Å or less, since the particle shape of the carbon black becomes more rounded, the interparticle interaction is reduced, and the carbon black is likely to be more uniformly dispersed with respect to the active material, so that a conductive path is more easily formed to obtain more excellent battery characteristics. From the viewpoint of further reducing the internal resistance and the viewpoint of more excellent discharge rate characteristics and cycle characteristics, the crystallite size (Lc) of the carbon black is preferably 24 Å or less and may be 22 Å or less or 20 Å or less.

That is, the crystallite size (Lc) of the carbon black may be, for example, 15 to 26 Å, 15 to 24 Å, 15 to 22 Å, 15 to 20 Å, 16 to 26 Å, 16 to 24 Å, 16 to 22 Å, 16 to 20 Å, 18 to 26 Å, 18 to 24 Å, 18 to 22 Å, 18 to 20 Å, 20 to 26 Å, 20 to 24 Å, or 20 to 22 Å.

The crystallite size (Lc) of the carbon black is measured according to JIS R 7651. Note that, the crystallite size (Lc) of the carbon black means the crystallite size in the c-axis direction of the carbon black crystal layer.

The average primary particle size of the carbon black is preferably 17 nm or more. When the average primary particle size of the carbon black is 17 nm or more, the interaction between the liquid medium and the electrical conducting material and the interaction between the electrical conducting materials are reduced, and the carbon black is likely to be more uniformly dispersed with respect to the active material, so that a conductive path is easily formed to more easily obtain excellent battery characteristics. The average primary particle size of the carbon black may be 18 nm or more, 19 nm or more, or 20 nm or more.

Furthermore, the average primary particle size of the carbon black is preferably 30 nm or less. When the average primary particle size of the carbon black is 30 nm or less, there are more electrical contact points with the active material and the electrical conducting material, and the effect of imparting electrical conductivity becomes favorable, so that excellent battery characteristics are more easily obtained. From the viewpoint of further reducing the internal resistance and the viewpoint of more excellent discharge rate characteristics and cycle characteristics, the average primary particle size of the carbon black is preferably 26 nm or less and may be 24 nm or less, 22 nm or less, or 20 nm or less. That is, the average primary particle size of the carbon black may be, for example, 17 to 30 nm, 17 to 26 nm, 17 to 24 nm, 17 to 22 nm, 17 to 20 nm, 18 to 30 nm, 18 to 26 nm, 18 to 24 nm, 18 to 22 nm, 18 to 20 nm, 19 to 30 nm, 19 to 26 nm, 19 to 24 nm, 19 to 22 nm, 19 to 20 nm, 20 to 30 nm, 20 to 26 nm, 20 to 24 nm, or 20 to 22 nm.

The average primary particle size of the carbon black means an averaged value of equivalent circle diameters measured based on images of the carbon black observed with a transmission electron microscope (TEM), and specifically, is obtained by capturing ten images of the carbon black at a magnification of 100000 times using a transmission electron microscope JEM-2000FX (manufactured by JEOL Ltd.), and measuring the equivalent circle diameters of 200 primary particles of the carbon black randomly extracted from the obtained images by image analysis to obtain an arithmetic average.

When a peak area of a peak with mass number m/z57 and a peak area of a peak with mass number m/z128 as detected by a temperature-programmed desorption gas analysis method of the carbon black are designated as S₁ and S₂, respectively, a ratio (S₂/S₁) of the peak area S₂ with respect to the peak area S₁ is preferably 0.2 to 1.9. The ratio (S₂/S₁) indicates the proportion of organic components adsorbed on the surface of the carbon black. When the ratio (S₂/S₁) is 1.9 or less, the organic components adsorbed on the surface of the carbon black are sufficiently reduced, and a decrease in electrical conductivity caused by the organic components trapping π electrons is significantly suppressed. Furthermore, when the ratio (S₂/S₁) is 0.2 or more, the organic components adsorbed on the surface of the carbon black play the role of a dispersant, and dispersibility in the liquid medium is improved, so that the slurry viscosity is further reduced. The peak area S₁ of the peak with mass number m/z57 and the peak area S₂ of the peak with mass number m/z128 can be measured by evolved gas analysis-mass spectrometry (EGA-MS). For example, the peak area S₁ of the peak with mass number m/z57 and the peak area S₂ of the peak with mass number m/z128 can be measured by setting the carbon black in a gas chromatograph mass spectrometer having a thermal cracking device, increasing the temperature to 800°C at 80°C/min after maintaining the carbon black at 50°C for 5 minutes in an atmospheric pressure He flow, and performing the mass spectrometry of the component desorbed by the temperature increase.

From the viewpoint of further reducing the internal resistance and the viewpoint of more excellent discharge rate characteristics and cycle characteristics, the ratio (S₂/S₁) may be 1.5 or less, 1.0 or less, 0.8 or less, 0.6 or less, 0.5 or less, 0.4 or less, or 0.3 or less. Furthermore, the ratio (S₂/S₁) may be 0.25 or more or 0.3 or more. That is, the ratio (S₂/S₁) may be, for example, 0.2 to 1.9, 0.2 to 1.5, 0.2 to 1.0, 0.2 to 0.8, 0.2 to 0.6, 0.2 to 0.5, 0.2 to 0.4, 0.2 to 0.3, 0.25 to 1.9, 0.25 to 1.5, 0.25 to 1.0, 0.25 to 0.8, 0.25 to 0.6, 0.25 to 0.5, 0.25 to 0.4, 0.25 to 0.3, 0.3 to 1.9, 0.3 to 1.5, 0.3 to 1.0, 0.3 to 0.8, 0.3 to 0.6, 0.3 to 0.5, or 0.3 to 0.4.

The volume resistivity of the carbon black may be 0.30 Ω·cm or less or 0.25 Ω·cm or less, from the viewpoint of excellent electrical conductivity. The volume resistivity of the carbon black is measured, for example, in a compressed state under a load of 7.5 MPa.

The ash content and the moisture content of the carbon black are not particularly limited. The ash content of the carbon black may be, for example, 0.04% by mass or less, and the moisture content of the carbon black may be, for example, 0.10% by mass or less.

The method for producing carbon black is not particularly limited. The carbon black may be produced, for example, by a production method including a synthesis step of treating a raw material gas containing a hydrocarbon in a cylindrical cracking furnace to obtain carbon black, and a high purification step of removing a magnetic foreign matter from the carbon black obtained in the synthesis step with a magnet.

In the synthesis step, a raw material gas is treated in a cylindrical cracking furnace. The cylindrical cracking furnace may include, for example, a thermal cracking portion where a thermal cracking reaction of the hydrocarbon is performed, and an aging portion where a thermal cracking reaction product is reformed. The cylindrical cracking furnace may further include a supply port through which the raw material gas is supplied to the thermal cracking portion, and a recovery port through which carbon black generated in the aging portion is recovered.

In the thermal cracking portion, the supplied raw material gas is preferably retained at a temperature of 1900°C or higher for 30 to 150 seconds. When the retention time of the raw material gas is 30 seconds or longer, it is possible to more reliably form carbon aerosols by the completion of the thermal cracking reaction and development of a chain structure. Furthermore, when the retention time of the raw material gas is 150 seconds or shorter, the aggregation of carbon aerosols is suppressed, so that the magnetic foreign matter is more easily removed in the high purification step and it becomes easy to obtain high-purity carbon black.

In the aging portion, the thermal cracking reaction product supplied from the thermal cracking portion is preferably retained at a temperature of 1700°C or higher for 20 to 90 seconds. When the retention time of the thermal cracking reaction product is 20 seconds or longer, it becomes easy to obtain carbon black with a higher quality by the reforming of the carbon aerosols and the development promotion of aggregates. Furthermore, when the retention time of the thermal cracking reaction product is 90 seconds or shorter, the aggregation of carbon aerosols is suppressed, so that the magnetic foreign matter is more easily removed in the high purification step and it becomes easy to obtain high-purity carbon black.

The retention time in each of the thermal cracking portion and the aging portion can be appropriately adjusted by adjusting the gas linear velocity of a circulating gas. The retention time in the aging portion is preferably shorter than the retention time in the thermal cracking portion. That is, the gas linear velocity in the aging portion is preferably faster than the gas linear velocity in the thermal cracking portion.

In the present embodiment, the raw material gas preferably contains acetylene as a carbon source. The content of the carbon source (for example, acetylene) in the raw material gas is, for example, 10% by volume or more, preferably 20% by volume or more, and more preferably 30% by volume or more, and may be 100% by volume. Note that, the content of each component in the raw material gas indicates a volume ratio based on the volume at 100°C and 1 atm.

The raw material gas may further contain hydrocarbons other than the carbon source (for example, acetylene). Examples of the other hydrocarbons include methane, ethane, propane, ethylene, propylene, butadiene, benzene, toluene, xylene, gasoline, kerosene, light oil, and heavy oil. By adding these other hydrocarbons, the reaction temperature is changed, so that the specific surface area of the carbon black can be increased or decreased. The other hydrocarbons are preferably selected from the group consisting of aromatic hydrocarbons such as benzene and toluene and unsaturated hydrocarbons such as ethylene and propylene.

In a case where the raw material gas contains acetylene and other hydrocarbons, the content of the other hydrocarbons is, for example, 0.1 to 99 parts by volume, preferably 0.2 to 50 parts by volume, and more preferably 0.3 to 30 parts by volume, with respect to 100 parts by volume of acetylene. That is, the content of the other hydrocarbons may be, for example, 0.1 to 99 parts by volume, 0.1 to 50 parts by volume, 0.1 to 30 parts by volume, 0.2 to 99 parts by volume, 0.2 to 50 parts by volume, 0.2 to 30 parts by volume, 0.3 to 99 parts by volume, 0.3 to 50 parts by volume, or 0.3 to 30 parts by volume, with respect to 100 parts by volume of acetylene.

The raw material gas may further contain water vapor gas, oxygen gas, hydrogen gas, carbon dioxide gas, and the like. As these gases, 99.9% by volume or more of high-purity gases are preferably used. When such high-purity gases are used, there is a tendency that it becomes easy to produce carbon black in which the amount of the magnetic foreign matter is small and the BET specific surface area and the oil absorption number are stable.

The content of the water vapor gas may be, for example, 0 to 80 parts by volume with respect to 100 parts by volume of the carbon source (for example, acetylene) in the raw material gas, and is preferably 0.1 to 70 parts by volume, more preferably 1 to 60 parts by volume, and further preferably 3 to 55 parts by volume. When the content of the water vapor gas is in the above range, the BET specific surface area of the carbon black tends to become larger. That is, the content of the water vapor gas may be, for example, 0 to 80 parts by volume, 0 to 70 parts by volume, 0 to 60 parts by volume, 0 to 55 parts by volume, 0.1 to 80 parts by volume, 0.1 to 70 parts by volume, 0.1 to 60 parts by volume, 0.1 to 55 parts by volume, 1 to 80 parts by volume, 1 to 70 parts by volume, 1 to 60 parts by volume, 1 to 55 parts by volume, 3 to 80 parts by volume, 3 to 70 parts by volume, 3 to 60 parts by volume, or 3 to 55 parts by volume, with respect to 100 parts by volume of the carbon source in the raw material gas.

In the synthesis step, it is preferable to supply the oxygen gas together with the raw material gas to the thermal cracking portion, and it is more preferable to supply the oxygen gas to the thermal cracking portion by spraying the oxygen gas from the circumference of the supply port through which the raw material gas is supplied to the thermal cracking portion.

The cylindrical cracking furnace preferably has a spray port for the oxygen gas near the supply port of the raw material gas and more preferably has a plurality of spray ports provided at equal intervals so as to surround the supply port. The number of spray ports is preferably 3 or more and more preferably 3 to 8.

Furthermore, the cylindrical cracking furnace may also include a nozzle with a multi-tube structure (for example, a double tube structure, a triple tube structure, or the like) having the spray port of the raw material gas and the spray port for spraying the oxygen gas from the circumference of the supply port. In the case of a double tube structure, for example, the raw material gas may be sprayed from an air gap portion on the inner cylinder side, and the oxygen gas may be sprayed from an air gap portion on the outer cylinder side. In the case of a triple tube structure composed of an inner tube, a middle tube, and an outer tube, for example, the oxygen gas may be sprayed from an air gap portion formed by the outer wall of the middle tube and the inner wall of the outer tube, and the raw material gas may be sprayed from the remaining air gap portion.

The amount of the oxygen gas sprayed is not particularly limited as long as the production yield of carbon black is not taken into account. Carbon black can be produced even when a large amount of the oxygen gas than necessary is sprayed. The amount of the oxygen gas sprayed may be, for example, 0 to 300 parts by volume, 0 to 250 parts by volume, 0 to 220 parts by volume, or 0 to 200 parts by volume, and is preferably 0.1 to 190 parts by volume, more preferably 0.5 to 180 parts by volume, and further preferably 1 to 160 parts by volume, with respect to 100 parts by volume of the carbon source (for example, acetylene) in the raw material gas. When the amount of the oxygen gas sprayed increases, there is a tendency that the BET specific surface area of the carbon black and the above-described ratio (S₁/S₂) further increase, and when the amount of the oxygen gas sprayed decreases, there is a tendency that the primary particle size of the carbon black increases. That is, the amount of the oxygen gas sprayed may be, for example, 0 to 300 parts by volume, 0 to 250 parts by volume, 0 to 220 parts by volume, 0 to 200 parts by volume, 0 to 190 parts by volume, 0 to 180 parts by volume, 0 to 160 parts by volume, 0.1 to 300 parts by volume, 0.1 to 250 parts by volume, 0.1 to 220 parts by volume, 0.1 to 200 parts by volume, 0.1 to 190 parts by volume, 0.1 to 180 parts by volume, 0.1 to 160 parts by volume, 0.5 to 300 parts by volume, 0.5 to 250 parts by volume, 0.5 to 220 parts by volume, 0.5 to 200 parts by volume, 0.5 to 190 parts by volume, 0.5 to 180 parts by volume, 0.5 to 160 parts by volume, 1 to 300 parts by volume, 1 to 250 parts by volume, 1 to 220 parts by volume, 1 to 200 parts by volume, 1 to 190 parts by volume, 1 to 180 parts by volume, or 1 to 160 parts by volume, with respect to 100 parts by volume of the carbon source in the raw material gas.

In the synthesis step, the primary particle size, the BET specific surface area, and the crystallite size (Lc) of carbon black to be obtained can be adjusted, for example, by adjusting the addition rate of the hydrocarbons other than acetylene, the amount of the oxygen gas to be sprayed, or the like.

The high purification step is a step of removing a magnetic foreign matter from the carbon black obtained in the synthesis step with a magnet. The high purification step may be, for example, a step of removing a magnetic foreign matter from the carbon black obtained in the synthesis step by bringing the carbon black into contact with the magnet or disposing the carbon black near the magnet (for example, passing the carbon black through near the magnet).

The maximum surface magnetic flux density of the magnet is not particularly limited, but may be, for example, 700 mT or more, and is preferably 1000 mT or more and more preferably 1200 mT or more. Thereby, a fine magnetic foreign matter adhering to the carbon black is more strongly adsorbed, and thus it becomes easy to obtain carbon black having a smaller nickel content. The upper limit of the maximum surface magnetic flux density of the magnet is not particularly limited, and may be, for example, 1400 mT or less. That is, the maximum surface magnetic flux density of the magnet may be, for example, 700 to 1400 mT, 1000 to 1400 mT, or 1200 to 1400 mT.

The high purification step may be a step of removing a magnetic foreign matter from the carbon black so that the nickel content is 50 ppb or less (preferably 40 ppb or less, more preferably 30 ppb or less, and further preferably 20 ppb or less). The lower limit of the nickel content is not particularly limited, but the nickel content in the carbon black may be, for example, 1 ppb or more, and from the viewpoint of cost and productivity, may be 10 ppb or more or 15 ppb or more. That is, the nickel content in the carbon black may be 1 to 50 ppb, 1 to 40 ppb, 1 to 30 ppb, 1 to 20 ppb, 10 to 50 ppb, 10 to 40 ppb, 10 to 30 ppb, 10 to 20 ppb, 15 to 50 ppb, 15 to 40 ppb, 15 to 30 ppb, or 15 to 20 ppb.

The content of the carbon black in the second agent is not particularly limited, and may be appropriately changed so that the content of the carbon black in the positive electrode composition is within a desired range. The content of the carbon black in the positive electrode composition may be, for example, 0.01% by mass or more, 0.05% by mass or more, 0.1% by mass or more, 0.2% by mass or more, 0.3% by mass or more, 0.4% by mass or more, or 0.5% by mass or more, on the basis of the total mass of the solid contents in the positive electrode composition. The content of the carbon black in the positive electrode composition may be, for example, 10% by mass or less, 7% by mass or less, 5% by mass or less, 4% by mass or less, 3% by mass or less, or 2% by mass or less, on the basis of the total mass of the solid contents in the positive electrode composition. That is, the content of the carbon black in the positive electrode composition may be, for example, 0.01 to 10% by mass, 0.01 to 7% by mass, 0.01 to 5% by mass, 0.01 to 4% by mass, 0.01 to 3% by mass, 0.01 to 2% by mass, 0.05 to 10% by mass, 0.05 to 7% by mass, 0.05 to 5% by mass, 0.05 to 4% by mass, 0.05 to 3% by mass, 0.05 to 2% by mass, 0.1 to 10% by mass, 0.1 to 7% by mass, 0.1 to 5% by mass, 0.1 to 4% by mass, 0.1 to 3% by mass, 0.1 to 2% by mass, 0.2 to 10% by mass, 0.2 to 7% by mass, 0.2 to 5% by mass, 0.2 to 4% by mass, 0.2 to 3% by mass, 0.2 to 2% by mass, 0.3 to 10% by mass, 0.3 to 7% by mass, 0.3 to 5% by mass, 0.3 to 4% by mass, 0.3 to 3% by mass, 0.3 to 2% by mass, 0.4 to 10% by mass, 0.4 to 7% by mass, 0.4 to 5% by mass, 0.4 to 4% by mass, 0.4 to 3% by mass, 0.4 to 2% by mass, 0.5 to 10% by mass, 0.5 to 7% by mass, 0.5 to 5% by mass, 0.5 to 4% by mass, 0.5 to 3% by mass, or 0.5 to 2% by mass, on the basis of the total mass of the solid contents in the positive electrode composition.

The content of the carbon black in the second agent may be appropriately changed so that a ratio (C₁/C₂) (mass ratio) of a content (C₁) of the carbon black with respect to a content (C₂) of the carbon nanotubes in the positive electrode composition is within a desired range. The ratio (C₁/C₂) may be, for example, 0.1 or more, and from the viewpoint of further reducing the internal resistance and the viewpoint of more excellent discharge rate characteristics and cycle characteristics, may be 0.3 or more, 0.4 or more, 0.5 or more, or 0.6 or more. Furthermore, the ratio (C₁/C₂) may be, for example, 0.95 or less, and from the viewpoint of further reducing the internal resistance and the viewpoint of more excellent discharge rate characteristics and cycle characteristics, may be 0.9 or less, 0.85 or less, or 0.8 or less. That is, the ratio (C₁/C₂) may be, for example, 0.1 to 0.95, 0.1 to 0.9, 0.1 to 0.85, 0.1 to 0.8, 0.3 to 0.95, 0.3 to 0.9, 0.3 to 0.85, 0.3 to 0.8, 0.4 to 0.95, 0.4 to 0.9, 0.4 to 0.85, 0.4 to 0.8, 0.5 to 0.95, 0.5 to 0.9, 0.5 to 0.85, 0.5 to 0.8, 0.6 to 0.95, 0.6 to 0.9, 0.6 to 0.85, or 0.6 to 0.8.

The second liquid medium is not particularly limited as long as it can dissolve the carbon black and is compatible with the first liquid medium and the third liquid medium. Examples of the second liquid medium include water, N-methyl-2-pyrrolidone, cyclohexane, methyl ethyl ketone, and methyl isobutyl ketone, and among these, from the viewpoint of ease in dispersibility of the carbon black, N-methyl-2-pyrrolidone is preferred. The second liquid medium may be the same as or different from the first liquid medium and the third liquid medium, but is preferably the same.

The content of the second liquid medium in the second agent is not particularly limited, and may be appropriately changed so that the solid content concentration of the positive electrode composition is within a desired range without any particular limitation as long as the content is in a range that the carbon black can be dispersed.

The solid content concentration of the second agent is not particularly limited, but may be, for example, 1.5% by mass or more, and may be 2.5% by mass or more, 3.5% by mass or more, or 5.0% by mass or more. Furthermore, the solid content concentration of the second agent may be, for example, 25.0% by mass or less, and may be 22.0% by mass or less, 20.0% by mass or less, or 18.0% by mass or less. That is, the solid content concentration of the second agent may be, for example, 1.5 to 25.0% by mass, 1.5 to 22.0% by mass, 1.5 to 20.0% by mass, 1.5 to 18.0% by mass, 2.5 to 25.0% by mass, 2.5 to 22.0% by mass, 2.5 to 20.0% by mass, 2.5 to 18.0% by mass, 3.5 to 25.0% by mass, 3.5 to 22.0% by mass, 3.5 to 20.0% by mass, 3.5 to 18.0% by mass, 5.0 to 25.0% by mass, 5.0 to 22.0% by mass, 5.0 to 20.0% by mass, or 5.0 to 18.0% by mass.

The second agent may further contain components other than the carbon black and the second liquid medium. The second agent may further contain, for example, polyvinylpyrrolidone, polyvinylimidazole, polyethylene glycol, polyvinyl alcohol, polyvinyl butyral, carboxymethylcellulose, acetylcellulose, a carboxylic acid-modified (meth)acrylic acid ester copolymer, or the like.

The third agent contains carbon nanotubes and a third liquid medium.

As the carbon nanotubes, carbon nanotubes having an average diameter of 5 to 15 nm and a ratio (average diameter/BET specific surface area) of the average diameter with respect to a BET specific surface area of 0.01 to 0.068 nm/(m²/g) are preferred. When the average diameter of the carbon nanotubes is as small as 5 to 15 nm and the ratio of the average diameter with respect to the BET specific surface area is 0.01 to 0.068 nm/(m²/g), more conductive paths can be formed in the positive electrode.

The average diameter of the carbon nanotubes is preferably 5 nm or more. When the average diameter of the carbon nanotubes is 5 nm or more, the interaction between the liquid medium and the electrical conducting material and the interaction between the electrical conducting materials are reduced, and the carbon nanotubes are likely to be more uniformly dispersed with respect to the active material. Thereby, a conductive path is easily formed, so that more excellent battery characteristics are obtained. The average diameter of the carbon nanotubes may be 6 nm or more.

Furthermore, the average diameter of the carbon nanotubes is preferably 15 nm or less. When the average diameter of the carbon nanotubes is 15 nm or less, there are more electrical contact points between the active material and the electrical conducting material, and the effect of imparting electrical conductivity becomes favorable, so that more excellent battery characteristics are easily obtained. From the viewpoint of further reducing the internal resistance and the viewpoint of more excellent discharge rate characteristics and cycle characteristics, the average diameter of the carbon nanotubes is preferably 12 nm or less and more preferably 10 nm or less, and may be 9 nm or less, 8 nm or less, or 7 nm or less.

That is, the average diameter of the carbon nanotubes may be, for example, 5 to 15 nm, 5 to 12 nm, 5 to 10 nm, 5 to 9 nm, 5 to 8 nm, 5 to 7 nm, 6 to 15 nm, 6 to 12 nm, 6 to 10 nm, 6 to 9 nm, 6 to 8 nm, or 6 to 7 nm.

The average diameter of the carbon nanotubes means an average value of diameters measured based on images of the carbon nanotubes observed with a transmission electron microscope (TEM), and specifically, is obtained by capturing ten images of the carbon nanotubes at a magnification of 200000 times using a transmission electron microscope JEM-2000FX (manufactured by JEOL Ltd.), and measuring the diameters of 100 carbon nanotubes randomly extracted from the obtained images by image analysis to obtain an arithmetic average.

The BET specific surface area of the carbon nanotubes is preferably 170 to 320 m²/g. When the BET specific surface area of the carbon nanotubes is 170 m²/g or more, there are more electrical contact points with the active material and the electrical conducting material, and the effect of imparting electrical conductivity becomes favorable, so that excellent battery characteristics are more easily obtained. When the BET specific surface area of the carbon nanotubes is 320 m²/g or less, the interaction between the liquid medium and the electrical conducting material and the interaction between the electrical conducting materials are reduced, and the carbon nanotubes are likely to be more uniformly dispersed with respect to the active material. Thereby, a conductive path is easily formed, so that more excellent battery characteristics are easily obtained. The BET specific surface area of the carbon nanotubes can be measured by a static capacity method according to JIS Z 8830 using nitrogen as an adsorbate.

From the viewpoint of further reducing the internal resistance and the viewpoint of more excellent discharge rate characteristics and cycle characteristics, the BET specific surface area of the carbon nanotubes may be 180 m²/g or more, 200 m²/g or more, 230 m²/g or more, 250 m²/g or more, 280 m²/g or more, or 300 m²/g or more. From the viewpoint of further reducing the internal resistance and the viewpoint of more excellent discharge rate characteristics and cycle characteristics, the BET specific surface area of the carbon nanotubes may be 300 m²/g or less. That is, the BET specific surface area of the carbon nanotubes may be, for example, 170 to 320 m²/g, 180 to 320 m²/g, 200 to 320 m²/g, 230 to 320 m²/g, 250 to 320 m²/g, 280 to 320 m²/g, 300 to 320 m²/g, 170 to 300 m²/g, 180 to 300 m²/g, 200 to 300 m²/g, 230 to 300 m²/g, 250 to 300 m²/g, or 280 to 300 m²/g.

The ratio (average diameter/BET specific surface area) of the average diameter with respect to the BET specific surface area of the carbon nanotubes is preferably 0.01 to 0.068 nm/(m²/g). The ratio (average diameter/BET specific surface area) is a value obtained by dividing the average diameter of the carbon nanotubes by the BET specific surface area of the carbon nanotubes. When the ratio (average diameter/BET specific surface area) is 0.01 nm/(m²/g) or more, entanglement between the carbon nanotubes is reduced, and the carbon nanotubes are likely to be more uniformly dispersed with respect to the active material. Thereby, a conductive path is easily formed, so that more excellent battery characteristics are obtained. When the ratio (average diameter/BET specific surface area) is 0.068 nm/(m²/g) or less, the number of carbon nanotubes per unit weight increases, and electricity can be allowed to flow more efficiently throughout the entire active material, so that more excellent battery characteristics are obtained.

From the viewpoint of further reducing the internal resistance and the viewpoint of more excellent discharge rate characteristics and cycle characteristics, the ratio (average diameterBET specific surface area) may be 0.06 nm/(m²/g) or less, 0.04 nm/(m²/g) or less, 0.03 nm/(m²/g) or less, or 0.02 nm/(m²/g) or less. From the viewpoint of further reducing the internal resistance and the viewpoint of more excellent discharge rate characteristics and cycle characteristics, the ratio (average diameterBET specific surface area) may be 0.02 nm/(m²/g) or more. That is, the ratio (average diameter/BET specific surface area) may be, for example, 0.01 to 0.068 nm/(m²/g), 0.01 to 0.04 nm/(m²/g), 0.01 to 0.03 nm/(m²/g), 0.01 to 0.02 nm/(m²/g), 0.02 to 0.068 nm/(m²/g), 0.02 to 0.04 nm/(m²/g), or 0.02 to 0.03 nm/(m²/g).

The method for producing carbon nanotubes is not particularly limited. The carbon nanotubes may be produced, for example, by a conventionally known method for producing carbon nanotubes.

The carbon nanotubes can be produced, for example, by placing a powdered catalyst in which iron is supported on magnesia (magnesium oxide) in the entire horizontal cross-sectional direction of a reactor in a vertical reactor, circulating methane in the vertical direction in the reactor, bringing the methane into contact with the catalyst at 500 to 1200°C, and then subjecting the resulting product (unoxidized carbon nanotubes) to an oxidation treatment. By such a method for producing carbon nanotubes, carbon nanotubes including several graphene layers and having an average diameter of 5 to 15 nm and a BET specific surface area of 160 to 300 m²/g are easily obtained.

The oxidation treatment of the above-described product may be, for example, a firing treatment. The temperature of the firing treatment is not particularly limited, and may be, for example, 300 to 1000°C. Since the temperature of the firing treatment is affected by the atmospheric gas, it is preferable to perform the firing treatment at a relatively low temperature in the case of high oxygen concentration and at a relatively high temperature in the case of low oxygen concentration. Specifically, examples of the firing treatment of the product include a method of performing firing within a range of a combustion peak temperature of the carbon nanotubes before the oxidation treatment ± 50°C in the atmosphere, but in a case where the oxygen concentration is higher than that in the atmosphere, firing is performed in a temperature range lower than a firing peak temperature, and in a case where the oxygen concentration is lower than that in the atmosphere, a temperature range higher than the firing peak temperature is selected. In particular, in the case of performing the firing treatment of the carbon nanotubes before the oxidation treatment in the atmosphere, the firing treatment is preferably performed in a range of a combustion peak temperature of the carbon nanotubes before the oxidation treatment ± 15°C.

The oxidation treatment of the above-described product may be a treatment with hydrogen peroxide, mixed acid, nitric acid, or the like. Examples of the method of treating the above-described product with hydrogen peroxide include a method of mixing the above-described product in 34.5% hydrogen peroxide to have a concentration of 0.01 to 10% by mass and then reacting the mixture at a temperature of 0 to 100°C for 0.5 to 48 hours. Furthermore, examples of the method of treating the above-described product with mixed acid include a method of mixing the above-described product with a mixed solution of concentrated sulfuric acid and concentrated nitric acid (concentrated sulfuric acid : concentrated nitric acid = 3 : 1) to have a concentration of 0.01 to 10% by mass and then reacting the mixture at a temperature of 0 to 100°C for 0.5 to 48 hours. The mixing ratio of the mixed acid (concentrated sulfuric acid : concentrated nitric acid) can be adjusted within a range of 1 : 10 to 10 : 1 according to the amount of the single-walled carbon nanotubes in the above-described product. Examples of the method of treating the above-described product with nitric acid include a method of mixing the above-described product in nitric acid having a concentration of 40 to 80% by mass to have a concentration of 0.01 to 10% by mass and then reacting the mixture at a temperature of 60 to 150°C for 0.5 to 48 hours.

By subjecting the above-described product to the oxidation treatment, impurities such as amorphous carbon and single-walled carbon nanotubes with low heat resistance in the product can be selectively removed, and the purity of several graphene layers, particularly, double- to five-walled carbon nanotubes can be improved. At the same time, by subjecting the product to the oxidation treatment, since a functional group is added to the surface of the carbon nanotubes, the affinity with a dispersion medium and additives is improved to improve dispersibility. Among the above-described oxidation treatments, a treatment using nitric acid is preferred.

The above-described oxidation treatment may be performed immediately after obtaining the carbon nanotubes before the oxidation treatment, and may be performed after another purification treatment. For example, in the case of using iron/magnesia as a catalyst, the oxidation treatment may be performed after the purification treatment with an acid such as hydrochloric acid is performed in order to remove the catalyst before the oxidation treatment, and the purification treatment may be performed in order to remove the catalyst after the oxidation treatment is performed.

The content of the carbon nanotubes in the third agent is not particularly limited, and may be appropriately changed so that the content of the carbon nanotubes in the positive electrode composition is within a desired range. The content of the carbon nanotubes in the positive electrode composition may be, for example, 0.01% by mass or more on the basis of the total mass of the solid contents in the positive electrode composition, and may be 0.03% by mass or more, 0.05% by mass or more, 0.07% by mass or more, 0.1% by mass or more, or 0.2% by mass or more, from the viewpoint of further reducing the internal resistance and the viewpoint of more excellent discharge rate characteristics and cycle characteristics. Furthermore, the content of the carbon nanotubes in the positive electrode composition may be, for example, 5% by mass or less on the basis of the total mass of the solid contents in the positive electrode composition, and may be 3% by mass or less, 2% by mass or less, 1% by mass or less, 0.9% by mass or less, 0.8% by mass or less, or 0.7% by mass or less. That is, the content of the carbon nanotubes in the positive electrode composition may be, for example, 0.01 to 5% by mass, 0.01 to 3% by mass, 0.01 to 2% by mass, 0.01 to 1% by mass, 0.01 to 0.9% by mass, 0.01 to 0.8% by mass, 0.01 to 0.7% by mass, 0.03 to 5% by mass, 0.03 to 3% by mass, 0.03 to 2% by mass, 0.03 to 1% by mass, 0.03 to 0.9% by mass, 0.03 to 0.8% by mass, 0.03 to 0.7% by mass, 0.05 to 5% by mass, 0.05 to 3% by mass, 0.05 to 2% by mass, 0.05 to 1% by mass, 0.05 to 0.9% by mass, 0.05 to 0.8% by mass, 0.05 to 0.7% by mass, 0.07 to 5% by mass, 0.07 to 3% by mass, 0.07 to 2% by mass, 0.07 to 1% by mass, 0.07 to 0.9% by mass, 0.07 to 0.8% by mass, 0.07 to 0.7% by mass, 0.1 to 5% by mass, 0.1 to 3% by mass, 0.1 to 2% by mass, 0.1 to 1% by mass, 0.1 to 0.9% by mass, 0.1 to 0.8% by mass, 0.1 to 0.7% by mass, 0.2 to 5% by mass, 0.2 to 3% by mass, 0.2 to 2% by mass, 0.2 to 1% by mass, 0.2 to 0.9% by mass, 0.2 to 0.8% by mass, or 0.2 to 0.7% by mass, on the basis of the total mass of the solid contents in the positive electrode composition.

The content of the carbon nanotubes in the third agent may be appropriately changed so that the ratio (C₁/C₂) (mass ratio) of the content (C₁) of the carbon black with respect to the content (C₂) of the carbon nanotubes in the positive electrode composition is within a desired range. The ratio (C₁/C₂) may be, for example, 0.1 or more, and from the viewpoint of further reducing the internal resistance and the viewpoint of more excellent discharge rate characteristics and cycle characteristics, may be 0.3 or more, 0.4 or more, 0.5 or more, or 0.6 or more. Furthermore, the ratio (C₁/C₂) may be, for example, 0.95 or less, and from the viewpoint of further reducing the internal resistance and the viewpoint of more excellent discharge rate characteristics and cycle characteristics, may be 0.9 or less, 0.85 or less, or 0.8 or less. That is, the ratio (C₁/C₂) may be, for example, 0.1 to 0.95, 0.1 to 0.9, 0.1 to 0.85, 0.1 to 0.8, 0.3 to 0.95, 0.3 to 0.9, 0.3 to 0.85, 0.3 to 0.8, 0.4 to 0.95, 0.4 to 0.9, 0.4 to 0.85, 0.4 to 0.8, 0.5 to 0.95, 0.5 to 0.9, 0.5 to 0.85, 0.5 to 0.8, 0.6 to 0.95, 0.6 to 0.9, 0.6 to 0.85, or 0.6 to 0.8.

The third liquid medium is not particularly limited as long as it can dissolve the carbon nanotubes and is compatible with the first liquid medium and the second liquid medium. Examples of the third liquid medium include water, N-methyl-2-pyrrolidone, cyclohexane, methyl ethyl ketone, and methyl isobutyl ketone, and among these, from the viewpoint of ease in dispersibility of the carbon nanotubes, N-methyl-2-pyrrolidone is preferred. The third liquid medium may be the same as or different from the first liquid medium and the second liquid medium, but is preferably the same.

The content of the third liquid medium in the third agent is not particularly limited, and may be appropriately changed so that the solid content concentration of the positive electrode composition is within a desired range without any particular limitation as long as the content is in a range that the carbon nanotubes can be dispersed.

The solid content concentration of the third agent is not particularly limited, but may be, for example, 0.2% by mass or more, and may be 0.8% by mass or more, 1.5% by mass or more, or 2.5% by mass or more. Furthermore, the solid content concentration of the third agent may be, for example, 15.0% by mass or less, and may be 12.5% by mass or less, 10.0% by mass or less, or 7.5% by mass or less. That is, the solid content concentration of the third agent may be, for example, 0.2 to 15% by mass, 0.2 to 12.5% by mass, 0.2 to 10.0% by mass, 0.2 to 7.5% by mass, 0.8 to 15% by mass, 0.8 to 12.5% by mass, 0.8 to 10.0% by mass, 0.8 to 7.5% by mass, 1.5 to 15% by mass, 1.5 to 12.5% by mass, 1.5 to 10.0% by mass, 1.5 to 7.5% by mass, 2.5 to 15% by mass, 2.5 to 12.5% by mass, 2.5 to 10.0% by mass, or 2.5 to 7.5% by mass.

The third agent may further contain components other than the carbon nanotubes and the third liquid medium. The third agent may further contain, for example, polyvinylpyrrolidone, polyvinylimidazole, polyethylene glycol, polyvinyl alcohol, polyvinyl butyral, carboxymethylcellulose, acetylcellulose, a carboxylic acid-modified (meth)acrylic acid ester copolymer, or the like.

The active material may be any material capable of reversibly occluding and releasing cations. The active material may be, for example, a lithium-containing composite oxide or lithium-containing polyanion compound, which contains manganese and has a volume resistivity of 1×10⁴ Ω·cm or more. Examples of the lithium-containing composite oxide containing manganese include lithium manganese oxides such as LiMnO₂, LiMnO₃, LiMn₂O₃, and Li₁₊ₓMn₂₋ₓO₄ (provided that, x = 0 to 0.33); and composite oxides containing one or more transition metal elements such as LiMnₓNi_{y}Co_{z}O₂ (provided that, x + y + z = 1, 0 ≤ y < 1, 0 ≤ z < 1, 0 ≤ x < 1), Li₁₊ₓMn_{2-x-y}M_{y}O₄ (provided that, x = 0 to 0.33, y = 0 to 1.0, 2 - x - y > 0), LiMn₂₋ₓMₓO₂ (provided that, x = 0.01 to 0.1), and Li₂Mn₃MO₈. Examples of the lithium-containing polyanion compound include polyanion compounds such as LiFePO₄, LiMnPO₄, and Li₂MPO₄F (provided that, M is at least one metal selected from Co, Ni, Fe, Cr, and Zn). M in each compositional formula is at least one selected from the group consisting of Fe, Co, Ni, Al, Cu, Mg, Cr, Zn, and Ta.

The average particle diameter (D₅₀) of the active material may be 20 µm or less or 10 µm or less, from the viewpoint that the binding property between the electrical conducting material and the binding material is sufficiently excellent and a battery with more excellent cycle characteristics is easily obtained. The average particle diameter (D₅₀) of the active material can be measured by a laser light scattering method.

The used amount of the active material may be appropriately changed so that the content of the active material in the positive electrode composition is within a desired range. The content of the active material in the positive electrode composition may be, for example, 80% by mass or more on the basis of the total mass of the solid contents in the positive electrode composition, and is preferably 85% by mass or more and may be 87% by mass or more, 90% by mass or more, 92% by mass or more, or 95% by mass, from the viewpoint that battery characteristics are further improved. Furthermore, the content of the active material in the positive electrode composition may be, for example, 99.9% by mass or less on the basis of the total mass of the solid contents in the positive electrode composition, and may be 99.5% by mass or less, 99% by mass or less, or 98% by mass or less. That is, the content of the active material in the positive electrode composition may be, for example, 80 to 99.9% by mass, 80 to 99.5% by mass, 80 to 99% by mass, 80 to 98% by mass, 85 to 99.9% by mass, 85 to 99.5% by mass, 85 to 99% by mass, 85 to 98% by mass, 87 to 99.9% by mass, 87 to 99.5% by mass, 87 to 99% by mass, 87 to 98% by mass, 90 to 99.9% by mass, 90 to 99.5% by mass, 90 to 99% by mass, 90 to 98% by mass, 92 to 99.9% by mass, 92 to 99.5% by mass, 92 to 99% by mass, 92 to 98% by mass, 95 to 99.9% by mass, 95 to 99.5% by mass, 95 to 99% by mass, or 95 to 98% by mass, on the basis of the total mass of the solid contents in the positive electrode composition.

The positive electrode composition obtained by the production method of the present embodiment contains a binding material, carbon black, carbon nanotubes, and an active material. The preferred range of the content of each component in the positive electrode composition is as described above.

The solid content concentration of the positive electrode composition is not particularly limited, but may be, for example, 50% by mass or more, and from the viewpoint of further enhancing the dispersibility to achieve more excellent discharge rate characteristics and cycle characteristics, the solid content concentration thereof is preferably 55% by mass or more and more preferably 60% by mass or more, and may be 65% by mass or more or 70% by mass or more. Furthermore, the solid content concentration of the positive electrode composition may be, for example, 90% by mass or less, and from the viewpoint of further decreasing the viscosity of the positive electrode composition to achieve more excellent discharge rate characteristics and cycle characteristics, the solid content concentration thereof is preferably 86% by mass or less and more preferably 82% by mass or less, and may be 78% by mass or less or 74% by mass or less. That is, the solid content concentration of the positive electrode composition may be, for example, 50 to 90% by mass, 50 to 86% by mass, 50 to 82% by mass, 50 to 78% by mass, 50 to 74% by mass, 55 to 90% by mass, 55 to 86% by mass, 55 to 82% by mass, 55 to 78% by mass, 55 to 74% by mass, 60 to 90% by mass, 60 to 86% by mass, 60 to 82% by mass, 60 to 78% by mass, 60 to 74% by mass, 65 to 90% by mass, 65 to 86% by mass, 65 to 82% by mass, 65 to 78% by mass, 65 to 74% by mass, 70 to 90% by mass, 70 to 86% by mass, 70 to 82% by mass, 70 to 78% by mass, or 70 to 74% by mass.

The viscosity of the positive electrode composition at 25°C and a shear rate of 10 (1/sec) may be, for example, 6000 mPa·s or less, is preferably 5000 mPa·s or less and more preferably 4000 mPa·s or less, and may be 3000 mPa·s or less. Furthermore, the viscosity of the positive electrode composition at 25°C and a shear rate of 10 (1/sec) may be, for example, 500 mPa·s or more, is preferably 600 mPa·s or more preferably 700 mPa·s or more, and may be 800 mPa·s or more. That is, the viscosity of the positive electrode composition at 25°C and a shear rate of 10 (1/sec) may be, for example, 500 to 6000 mPa·s, 500 to 5000 mPa·s, 500 to 4000 mPa·s, 500 to 3000 mPa·s, 600 to 6000 mPa·s, 600 to 5000 mPa·s, 600 to 4000 mPa·s, 600 to 3000 mPa·s, 700 to 6000 mPa·s, 700 to 5000 mPa·s, 700 to 4000 mPa·s, 700 to 3000 mPa·s, 800 to 6000 mPa·s, 800 to 5000 mPa·s, 800 to 4000 mPa·s, or 800 to 3000 mPa·s.

### (Method for producing positive electrode)

A method for producing a positive electrode of the present embodiment includes a first step of producing a positive electrode composition by the aforementioned production method, and a second step of applying the positive electrode composition onto a current collector to form a mixed material layer containing the carbon black, the carbon nanotubes, the binding material, and the active material on the current collector.

In the first step, a positive electrode composition is produced by the aforementioned production method. The first step may be a step of producing a positive electrode composition by the production method of the aforementioned first embodiment, and may be a step of producing a positive electrode composition by the production method of the aforementioned second embodiment.

In the second step, the positive electrode composition is applied onto a current collector to form a mixed material layer on the current collector. The mixed material layer is a layer containing solid contents (at least the carbon black, the carbon nanotubes, the binding material, and the active material) in the positive electrode composition, and may be a layer obtained by removing at least a part of the liquid medium from the positive electrode composition.

The current collector is not particularly limited, and any known current collector can be used without particular limitation. As the current collector, for example, metallic foils (metals such as gold, silver, copper, platinum, aluminum, iron, nickel, chromium, manganese, lead, tungsten, and titanium, and alloys containing any one of these metals as a main component) are used. Among these, it is preferable to use aluminum for a positive electrode and copper for a negative electrode. The current collector is generally provided in the form of a foil, but is not limited thereto, and perforated foil-like and mesh-like current collectors can also be used.

The method of applying the positive electrode composition onto the current collector is not particularly limited, and may be, for example, methods such as a die coating method, a dip coating method, a roll coating method, a doctor coating method, a knife coating method, a spray coating method, a gravure coating method, a screen printing method, and an electrostatic coating method.

The amount of the positive electrode composition applied is not particularly limited, and may be appropriately adjusted so that the thickness of the mixed material layer is within a desired range.

The mixed material layer may be formed by removing at least a part of the liquid medium from the coating film of the positive electrode composition formed on the current collector. The method of removing the liquid medium is not particularly limited, and examples of a method of vaporizing at least a part of the liquid medium by heating and/or reducing pressure include standing dry, a blowing dryer, a hot air dryer, an infrared heater, and a far infrared heater.

The method for producing a positive electrode of the present embodiment may be further include a third step of pressurizing the mixed material layer formed in the second step and the current collector in a lamination direction. The mixed material layer and the current collector can be brought into close contact with each other by the third step.

The pressurizing method in the third step is not particularly limited, and may be, for example, a method such as roll pressing, mold pressing, or calendar pressing.

The thickness of the mixed material layer in the positive electrode is not particularly limited, but may be, for example, 50 µm or more, and from the viewpoint of increasing the capacity of the battery, the thickness thereof is preferably 55 µm or more and more preferably 60 µm or more, and may be 65 µm or more or 70 µm or more. Furthermore, the thickness of the mixed material layer in the positive electrode may be, for example, 150 µm or less, and from the viewpoint of further enhancing discharge rate characteristics, the thickness thereof is preferably 140 µm or less and more preferably 130 µm or less, and may be 120 µm or less or 110 µm or less. That is, the thickness of the mixed material layer in the positive electrode may be, for example, 50 to 150 µm, 50 to 140 µm, 50 to 130 µm, 50 to 120 µm, 50 to 110 µm, 55 to 150 µm, 55 to 140 µm, 55 to 130 µm, 55 to 120 µm, 55 to 110 µm, 60 to 150 µm, 60 to 140 µm, 60 to 130 µm, 60 to 120 µm, 60 to 110 µm, 65 to 150 µm, 65 to 140 µm, 65 to 130 µm, 65 to 120 µm, 65 to 110 µm, 70 to 150 µm, 70 to 140 µm, 70 to 130 µm, 70 to 120 µm, or 70 to 110 µm.

The positive electrode in the present embodiment can be suitably used as a positive electrode of a battery, particularly, a secondary battery (lithium ion secondary battery).

The battery (preferably a secondary battery, more preferably a lithium ion secondary battery) in the present embodiment includes a positive electrode produced by the aforementioned production method. In the battery of the present embodiment, the configuration other than the positive electrode may be the same configuration as in a known battery.

The use applications of the battery in the present embodiment are not particularly limited, and the battery can be used, for example, in a wide range of fields of portable AV devices such as digital cameras, video cameras, portable audio players, and portable liquid crystal display televisions; portable information terminals such as notebook computers, smartphones, and mobile PCs; and others such as portable game machines, power tools, electric bicycles, hybrid cars, electric cars, and power storage systems.

### Examples

Hereinafter, the present invention will be more specifically described on the basis of Examples. However, the present invention is not limited to Examples below.

### <Example 1>

### (Carbon black)

Carbon black was produced by supplying acetylene at 12 Nm³/h, toluene at 32 kg/h, and oxygen at 22 Nm³/h, which were raw materials, from a nozzle installed upstream of a carbon black reaction furnace (furnace length: 6 m, furnace diameter: 0.65 m), and collected by a bag filter installed downstream of the reaction furnace. Thereafter, the collected carbon black was passed through a dry cyclone device and an iron removal magnet and recovered in a tank. Note that, acetylene, toluene, and oxygen were heated to 115°C and then supplied to the reaction furnace, thereby obtaining Carbon black A. The obtained Carbon black A had a BET specific surface area of 240 m²/g, an average primary particle size of 20 nm, and a crystallite size (Lc) of 16 Å.

### (First agent)

As the first agent, an N-methyl-2-pyrrolidone (described as "NMP" hereinafter) solution of polyvinylidene fluoride (manufactured by KUREHA CORPORATION, "L#7208", solid content concentration: 8.0% by weight) was prepared.

### (Second agent)

Carbon black A, NMP as a dispersion medium, and polyvinyl alcohol (manufactured by Denka Company Limited, POVAL B05, saponification degree: 86.5 mol%, average polymerization degree: 600) as a dispersant were prepared. 1.0% by mass of polyvinyl alcohol and 10.0% by mass of Carbon black A were added to 89.0% by mass of NMP and stirred with a planetary mixer (manufactured by PRIMIX Corporation, HIVIS DISPER MIX 3D-5 type) for 120 minutes to prepare a slurry containing Carbon black A. The obtained slurry was charged into a bead mill (manufactured by Ashizawa Finetech Ltd., Mugenflow MGF2-ZA) equipped with zirconia beads (diameter: 0.5 mm), and a dispersion treatment was performed. After performing the dispersion treatment, the zirconia beads were removed by filtration to obtain a second agent.

### (Third agent)

Carbon nanotubes (manufactured by Jiangsu Cnano Technology Co., Ltd., "Flotube 6000", average diameter: 6 nm, BET specific surface area: 300 m²/g, average diameterBET specific surface area: 0.02), NMP as a dispersion medium, and polyvinylpyrrolidone (manufactured by DKS Co. Ltd., PITZCOL K90) as a dispersant were prepared. 1.0% by mass of polyvinylpyrrolidone and 4.0% by mass of carbon nanotubes were added to 95.0% by mass of NMP and stirred with a planetary mixer (manufactured by PRIMIX Corporation, HIVIS DISPER MIX 3D-5 type) for 120 minutes to prepare a slurry containing carbon nanotubes. The obtained slurry was charged into a bead mill (manufactured by Ashizawa Finetech Ltd., Mugenflow MGF2-ZA) equipped with zirconia beads (diameter: 0.5 mm), and a dispersion treatment was performed. After performing the dispersion treatment, the zirconia beads were removed by filtration to obtain a third agent.

### (Production of positive electrode composition)

Lithium nickel manganese cobalt oxide (manufactured by Beijing Easpring Material Technology Co., Ltd., "ME6E") having an average particle diameter D₅₀ of 10 µm was prepared as an active material.

As a first stage, the first agent, the second agent, and the third agent were weighed in a plastic container so that the contents of the carbon black, the carbon nanotubes, and the binding material were 0.7 parts by mass, 0.3 parts by mass, and 2 parts by mass, respectively, and mixed using a rotation/revolution type mixer (manufactured by THINKY CORPORATION, THINKY MIXER ARV-310) at a revolution speed of 2000 rpm for 5 minutes to obtain a mixed solution.

As a second stage, 97 parts by mass of the active material was added to the mixed solution obtained in the first stage and mixed using a rotation/revolution type mixer (manufactured by THINKY CORPORATION, THINKY MIXER ARV-310) at a revolution speed of 2000 rpm for 5 minutes to obtain a positive electrode composition.

### (Production of positive electrode)

The positive electrode composition was deposited on one surface of an aluminum foil (manufactured by UACJ Corporation) having a thickness of 15 µm using an applicator to produce a laminate, and the laminate was left to stand still in a dryer and pre-dried at 105°C for 1 hour to completely remove NMP. Next, the dried laminate was pressed using a roll press at a linear pressure of 200 kg/cm to adjust a total thickness of the laminate to 80 µm. Next, the laminate was vacuum-dried at 170°C for 3 hours to completely remove residual moisture, thereby obtaining a positive electrode including a current collector and a mixed material layer.

### (Production of negative electrode)

Pure water (manufactured by KANTO CHEMICAL CO., INC.) as a solvent, artificial graphite (manufactured by Hitachi Chemical Company, Ltd., "MAG-D") as a negative electrode active material, styrene-butadiene rubber (manufactured by Zeon Corporation, "BM-400B", described as "SBR" hereinafter) as a binding material, and carboxymethylcellulose (manufactured by Daicel Corporation, "D2200", described as "CMC" hereinafter) as a dispersant were prepared. Next, CMC and artificial graphite were weighed and mixed so that the solid content of CMC was 1% by mass and the solid content of artificial graphite was 97% by mass, and pure water was added to this mixture and mixed using a rotation/revolution type mixer (manufactured by THINKY CORPORATION, THINKY MIXER ARV-310) until a homogeneous state was obtained, thereby obtaining a mixture. Next, SBR was weighed so that the solid content was 2% by mass, added to the obtained mixture, and mixed using a rotation/revolution type mixer (manufactured by THINKY CORPORATION, THINKY MIXER ARV-310) until a homogeneous state was obtained, thereby obtaining a negative electrode composition. Next, the negative electrode composition was deposited on a copper foil (manufactured by UACJ Corporation) having a thickness of 10 µm using an applicator to produce a laminate, and the laminate was left to stand still in a dryer and pre-dried at 60°C for 1 hour. Next, the laminate was pressed using a roll press at a linear pressure of 50 kg/cm to adjust a total thickness of the laminate to 60 µm. Next, the laminate was vacuum-dried at 120°C for 3 hours to completely remove residual moisture, thereby obtaining a negative electrode including a current collector and a mixed material layer.

### (Production of battery)

In a dry room controlled to a dew point of -50°C or lower, the produced positive electrode was processed to 40 × 40 mm, the produced negative electrode was processed to 44 × 44 mm, and then an aluminum tab and a nickel tab were welded to the positive electrode and the negative electrode, respectively. A polyolefin microporous membrane processed to 45 × 45 mm was disposed between the positive electrode and the negative electrode so that mixed material-coated surfaces of the positive electrode and the negative electrode faced each other at the center. Next, a sheet-shaped exterior package cut and processed into 70 × 140 mm square was folded in half at the center part of the long side. Next, while the exterior package was disposed so that the aluminum tab for the positive electrode and the nickel tab for the negative electrode were exposed to the outside of the exterior package, the laminate of the positive electrode/the polyolefin microporous membrane/the negative electrode was sandwiched by the exterior package folded in half. Next, using a heat sealer, the two sides of the exterior package including the side where the aluminum tab for the positive electrode and the nickel tab for the negative electrode were exposed were heated and fused, 2 g of an electrolytic solution (manufactured by KISHIDA CHEMICAL Co., Ltd., a solution containing ethylene carbonate/diethyl carbonate = 1/2 (volume ratio) and a 1 M LiPF₆ solution) was injected from one side not heated and fused to sufficiently permeate the electrolytic solution into the positive electrode, the negative electrode, and the polyolefin microporous membrane, and the remaining side of the exterior package was heated and fused with a vacuum heat sealer while the vacuuming the interior of the exterior package, thereby obtaining a lithium ion secondary battery.

### <Example 2>

The same first agent, second agent, third agent, and active material as those in Example 1 were prepared.

As a first stage, the first agent and the second agent were weighed in a plastic container so that the contents of the carbon black and the binding material were 0.7 parts by mass and 2 parts by mass, respectively, and mixed using a rotation/revolution type mixer (manufactured by THINKY CORPORATION, THINKY MIXER ARV-310) at a revolution speed of 2000 rpm for 5 minutes to obtain a first mixed solution.

As a second stage, the third agent was added to the first mixed solution so that the content of the carbon nanotubes was 0.3 parts by mass, and mixed using a rotation/revolution type mixer (manufactured by THINKY CORPORATION, THINKY MIXER ARV-310) at a revolution speed of 2000 rpm for 5 minutes to obtain a second mixed solution.

As a third stage, 97 parts by mass of the active material was added to the second mixed solution and mixed using a rotation/revolution type mixer (manufactured by THINKY CORPORATION, THINKY MIXER ARV-310) at a revolution speed of 2000 rpm for 5 minutes to obtain a positive electrode composition.

A positive electrode and a battery were produced in the same manner as in Example 1 using the obtained positive electrode composition.

### <Example 3>

A second agent was prepared in the same manner as in Example 1, except that Carbon black A was changed to carbon black having a BET specific surface area of 133 m²/g, an average primary particle size of 26 nm, and a crystallite size (Lc) of 25 Å. Furthermore, the same first agent, third agent, and active material as those in Example 1 were prepared.

As a first stage, the first agent, the second agent, and the third agent were weighed in a plastic container so that the contents of the carbon black, the carbon nanotubes, and the binding material were 1.4 parts by mass, 0.6 parts by mass, and 2 parts by mass, respectively, and mixed using a rotation/revolution type mixer (manufactured by THINKY CORPORATION, THINKY MIXER ARV-310) at a revolution speed of 2000 rpm for 5 minutes to obtain a mixed solution.

As a second stage, 96 parts by mass of the active material was added to the mixed solution obtained in the first stage and mixed using a rotation/revolution type mixer (manufactured by THINKY CORPORATION, THINKY MIXER ARV-310) at a revolution speed of 2000 rpm for 5 minutes to obtain a positive electrode composition.

A positive electrode and a battery were produced in the same manner as in Example 1 using the obtained positive electrode composition.

### <Example 4>

A third agent was produced in the same manner as in Example 1, except that the carbon nanotubes were changed to carbon nanotubes (manufactured by Jiangsu Cnano Technology Co., Ltd., "Flotube 7000") having an average diameter of 9 nm, a BET specific surface area of 250 m²/g, and an average diameter/a BET specific surface area of 0.036.

A positive electrode composition, a positive electrode, and a battery were produced in the same manner as in Example 1, except that this third agent was used.

### <Example 5>

A third agent was produced in the same manner as in Example 1, except that the carbon nanotubes were changed to carbon nanotubes (manufactured by Jiangsu Cnano Technology Co., Ltd., "Flotube 7000") having an average diameter of 9 nm, a BET specific surface area of 250 m²/g, and an average diameter/a BET specific surface area of 0.036. Furthermore, the same first agent, second agent, and active material as those in Example 1 were prepared.

As a first stage, the first agent and the second agent were weighed in a plastic container so that the contents of the carbon black and the binding material were 0.7 parts by mass and 2 parts by mass, respectively, and mixed using a rotation/revolution type mixer (manufactured by THINKY CORPORATION, THINKY MIXER ARV-310) at a revolution speed of 2000 rpm for 5 minutes to obtain a first mixed solution.

As a second stage, the third agent was added to the first mixed solution so that the content of the carbon nanotubes was 0.3 parts by mass, and mixed using a rotation/revolution type mixer (manufactured by THINKY CORPORATION, THINKY MIXER ARV-310) at a revolution speed of 2000 rpm for 5 minutes to obtain a second mixed solution.

As a third stage, 97 parts by mass of the active material was added to the second mixed solution and mixed using a rotation/revolution type mixer (manufactured by THINKY CORPORATION, THINKY MIXER ARV-310) at a revolution speed of 2000 rpm for 5 minutes to obtain a positive electrode composition.

A positive electrode and a battery were produced in the same manner as in Example 1 using the obtained positive electrode composition.

### <Comparative Example 1>

The same first agent, second agent, third agent, and active material as those in Example 1 were prepared.

The first agent, the second agent, the third agent, and the active material were weighed in a plastic container so that the contents of the carbon black, the carbon nanotubes, the binding material, and the active material were 0.7 parts by mass, 0.3 parts by mass, 2 parts by mass, and 97 parts by mass, respectively, and mixed using a rotation/revolution type mixer (manufactured by THINKY CORPORATION, THINKY MIXER ARV-310) at a revolution speed of 2000 rpm for 5 minutes to obtain a positive electrode composition.

A positive electrode and a battery were produced in the same manner as in Example 1 using the obtained positive electrode composition.

### <Comparative Example 2>

The same first agent, second agent, third agent, and active material as those in Example 1 were prepared.

As a first stage, the first agent and the third agent were weighed in a plastic container so that the contents of the carbon nanotubes and the binding material were 0.3 parts by mass and 2 parts by mass, respectively, and mixed using a rotation/revolution type mixer (manufactured by THINKY CORPORATION, THINKY MIXER ARV-310) at a revolution speed of 2000 rpm for 5 minutes to obtain a first mixed solution.

As a second stage, the second agent and the active material were added to the mixed solution obtained in the first stage so that the contents of the carbon black and the active material were 0.7 parts by mass and 97 parts by mass, and mixed using a rotation/revolution type mixer (manufactured by THINKY CORPORATION, THINKY MIXER ARV-310) at a revolution speed of 2000 rpm for 5 minutes to obtain a positive electrode composition.

A positive electrode and a battery were produced in the same manner as in Example 1 using the obtained positive electrode composition.

### <Comparative Example 3>

The same first agent, second agent, third agent, and active material as those in Example 1 were prepared.

As a first stage, the second agent and the third agent were weighed in a plastic container so that the contents of the carbon black and the carbon nanotubes were 0.7 parts by mass and 0.3 parts by mass, respectively, and mixed using a rotation/revolution type mixer (manufactured by THINKY CORPORATION, THINKY MIXER ARV-310) at a revolution speed of 2000 rpm for 5 minutes to obtain a mixed solution.

As a second stage, the first agent and the active material were added to the mixed solution obtained in the first stage so that the contents of the binding material and the active material were 2 parts by mass and 97 parts by mass, and mixed using a rotation/revolution type mixer (manufactured by THINKY CORPORATION, THINKY MIXER ARV-310) at a revolution speed of 2000 rpm for 5 minutes to obtain a positive electrode composition.

A positive electrode and a battery were produced in the same manner as in Example 1 using the obtained positive electrode composition.

The battery performance of the produced lithium ion secondary battery was evaluated using the following method.

### (Evaluation of battery)

### [Internal resistance]

The produced battery was charged with a constant current and constant voltage limited to 4.3 V and 0.2 C at 25°C and then discharged to 3.0 V at a constant current of 0.2 C. Next, the battery was charged/discharged for 5 cycles under the same conditions, and then charged so that the depth of charge was 50%. Thereafter, impedance measurement was performed in a frequency range of 10 MHz to 0.001 Hz at an oscillation voltage of 5 mV to measure the internal resistance. The measurement results of the internal resistance are shown in Table 1.

### [Discharge rate characteristics (percent rate capacity retention)]

The produced battery was charged with a constant current and constant voltage limited to 4.3 V and 0.2 C at 25°C and then discharged to 3.0 V at a constant current of 0.2 C. Next, the battery was recovery charged with a constant current and constant voltage limited to 4.3 V and 0.2 C again, and then discharged to 3.0 V at a constant current of 0.2 C, and the discharge capacity at this time was measured. Next, while the battery was charged with a constant current and constant voltage limited to 4.3 V and 0.2 C set as the recovery charging conditions, and the discharge current was changed stepwise to 0.5 C, 1 C, 2 C, and 3 C, the recovery charging and discharging were repeated, and the discharge capacity with respect to each discharge current was measured. As an index of discharge rate characteristics of the battery, the capacity retention rate of a capacity discharged at 3 C with respect to that discharged at 0.2 C was calculated as percent rate capacity retention. The calculation results of the percent rate capacity retention are shown in Table 1.

### [Cycle characteristics (percent cycle capacity retention)]

The produced battery was charged with a constant current and constant voltage limited to 4.3 V and 1 C at 25°C and then discharged to 3.0 V at a constant current of 1 C. The above-described charging and discharging were repeated for 500 cycles, and the discharge capacity at each cycle was measured. As an index of cycle characteristics of the battery, the capacity retention rate after 500 cycles with respect to the capacity retention rate after 1 cycle was calculated as percent cycle capacity retention. The calculation results of the percent cycle capacity retention are shown in Table 1.

**[Table 1]**

| | Example | | | | | Comparative Example | | |
|---|---|---|---|---|---|---|---|---|
| | 1 | 2 | 3 | 4 | 5 | 1 | 2 | 3 |
| Internal resistance (Ω) | 1.48 | 1.41 | 1.51 | 1.53 | 1.51 | 1.55 | 1.67 | 1.68 |
| Percent rate capacity retention (%) | 96.4 | 96.8 | 92.4 | 95.1 | 95.8 | 90.8 | 87.1 | 87.9 |
| Percent cycle capacity retention (%) | 93.2 | 94.7 | 91.1 | 91.5 | 92.1 | 90.1 | 88.5 | 88.1 |

## Claims

1. A method for producing a positive electrode composition, the method comprising:
a first step of mixing a first agent containing a binding material and a first liquid medium, a second agent containing carbon black and a second liquid medium, and a third agent containing carbon nanotubes and a third liquid medium to obtain a mixed solution; and
a second step of mixing the mixed solution and an active material to obtain a positive electrode composition.

2. A method for producing a positive electrode composition, the method comprising:
a first step of mixing a first agent containing a binding material and a first liquid medium and a second agent containing carbon black and a second liquid medium to obtain a first mixed solution;
a second step of mixing the first mixed solution and a third agent containing carbon nanotubes and a third liquid medium to obtain a second mixed solution; and
a third step of mixing the second mixed solution and an active material to obtain a positive electrode composition.

3. The method according to claim 1 or 2, wherein the carbon black has a BET specific surface area of 100 to 400 m²/g and a crystallite size (Lc) of 15 to 26 Å.

4. The method according to claim 1 or 2, wherein the carbon nanotubes have an average diameter of 5 to 15 nm, and
a ratio (average diameter/BET specific surface area) of the average diameter with respect to a BET specific surface area of the carbon nanotubes is 0.01 to 0.068 nm/(m²/g).

5. The method according to claim 1 or 2, wherein a content of the carbon black is 40 to 90% by mass on the basis of the total amount of the carbon black and the carbon nanotubes.

6. A method for producing a positive electrode, the method comprising:
a first step of producing a positive electrode composition by the method according to claim 1 or 2; and
a second step of applying the positive electrode composition onto a current collector to form a mixed material layer containing the carbon black, the carbon nanotubes, the binding material, and the active material on the current collector.
